# EUROPÄISCHE PATENTSCHRIFT

(11) **EP 3 503 780 B1**
(45) Veröffentlichungstag und Bekanntmachung des Hinweises auf die Patenterteilung: **08.07.2020**
(21) Anmeldenummer: 17748476.3
(22) Anmeldetag: 03.08.2017
(51) Int. Cl.: A47J 43/08

(54) **HALTERUNGS- UND ANTRIEBSVORRICHTUNG FÜR WERKZEUGE IN EINER KÜCHENMASCHINE**
MOUNTING AND DRIVE DEVICE FOR TOOLS IN A FOOD PROCESSOR
DISPOSITIF DE RETENUE ET D'ENTRAÎNEMENT D'OUTILS DANS UN ROBOT DE CUISINE

(30) Priorität: 26.08.2016 DE 102016216107
(43) Veröffentlichungstag der Anmeldung: 03.07.2019
(73) Patentinhaber: BSH Hausgeräte GmbH, 81739 München (DE)
(72) Erfinder: KOVACIC, Peter, 3303 Gomilsko (SI); DECMAN, Igor, 3232 Ponikva (SI); STROJANSEK, Aleksander, 3331 Nazarje (SI)
(86) Internationale Anmeldenummer: PCT/EP2017/069614
(87) Internationale Veröffentlichungsnummer: WO 2018/036773

(56) Entgegenhaltungen:
- DE-A1-102005 040 544
- DE-B- 1 021 986

## Beschreibung

### Gebiet der Erfindung

Die Erfindung betrifft eine Halterungs- und Antriebsvorrichtung für rotierbare Werkzeuge für eine Küchenmaschine. Des Weiteren betrifft die Erfindung eine Getriebeeinheit für eine Küchenmaschine mit einer Halterungs- und Antriebsvorrichtung für rotierbare Werkzeuge sowie eine Küchenmaschine mit einer Getriebeeinheit.

### Hintergrund der Erfindung

In einer Küchenmaschine ist eine Halterungs- und Antriebsvorrichtung für rotierbare Werkzeuge vorgesehen, in die das jeweilige Werkzeug eingesteckt werden kann. Die Halterungs- und Antriebsvorrichtung muss das Werkzeug so haltern, dass es während des Betriebs der Küchenmaschine nicht herausgeschleudert werden kann.

In der deutschen Patentschrift DE 25 51 842 C3 ist ein elektromotorisch betriebenes Antriebsaggregat für Küchenmaschinen beschrieben, das ein Planetengetriebe mit einer Kegelradverzahnung aufweist, dessen Planetenrad mit einer geneigten Achse umläuft und mit seiner Achse die Achse des Zentralrades schneidet. Dabei ist eine Halterungs- und Antriebsvorrichtung vorgesehen, die mit dem Planetenrad verbunden ist.

Die Schrift DE-B-1021986 offenbart eine Halterungs- und Antriebsvorrichtung nach dem Oberbegriff des unabhängigen Anspruchs 1.

### Der Erfindung zugrundeliegende Aufgabe

Es ist Aufgabe der Erfindung, eine Halterungs- und Antriebseinheit für rotierbare Werkzeuge in einer Küchenmaschine bereitzustellen, die auch dann eine zuverlässige Halterung von Werkzeugen ermöglicht, wenn die Werkzeuge mit unterschiedlichen Drehgeschwindigkeiten angetrieben werden.

### Erfindungsgemäße Lösung

Die Lösung der gestellten Aufgabe gelingt durch Bereitstellen einer Halterungs- und Antriebsvorrichtung für rotierbare Werkzeuge für eine Küchenmaschine, wobei die Halterungs- und Antriebsvorrichtung eine rotierbare Hohlwelle mit einer ersten Passungsaufnahme zur Aufnahme eines ersten Typs von Werkzeugen und ein weiteres Kupplungsstück mit einer zweiten Passungsaufnahme zur Aufnahme eines zweiten Typs von Werkzeugen umfasst, das oberhalb der Hohlwelle rotierbar gelagert ist. Darüber hinaus umfasst die Halterungs- und Antriebsvorrichtung mindestens einen Anpresskörper, der an oder in mindestens einer zugehörigen Ausnehmung der Hohlwelle angeordnet ist, und mindestens ein Federelement, durch dessen Federkraft der mindestens eine Anpresskörper durch die zugehörige Ausnehmung in der Hohlwelle hindurch radial nach innen drückbar ist.

Die Halterungs- und Antriebsvorrichtung für rotierbare Werkzeuge umfasst zusätzlich zu der rotierbaren Hohlwelle, die einen ersten Typ von Werkzeugen antreiben kann, ein weiteres Kupplungsstück, das oberhalb der Hohlwelle rotierbar gelagert ist und zum Antrieb eines zweiten Typs von rotierbaren Werkzeugen ausgelegt ist. Dabei kann die rotierbare Hohlwelle mit einer anderen Geschwindigkeit als das weitere Kupplungsstück angetrieben werden, um auf diese Weise unterschiedliche Antriebsgeschwindigkeiten für unterschiedliche Typen von Werkzeugen bereitstellen zu können. Die rotierbare Hohlwelle und das weitere Kupplungsstück können dabei entweder mit gleicher Drehrichtung oder mit unterschiedlicher Drehrichtung angetrieben werden.

In Bezug auf die Halterungs- und Antriebsvorrichtung sollen die Begriffe "oben", "oberhalb", "unten" und "unterhalb" in Hinblick auf eine in eine Küchenmaschine eingebaute Halterungs- und Antriebsvorrichtung verstanden werden, wobei die Küchenmaschine zum bestimmungsgemäßen Gebrauch auf einer Arbeitsplatte steht.

Unabhängig von der jeweiligen Drehgeschwindigkeit und Drehrichtung sollen aber alle in die Halterungs- und Antriebsvorrichtung eingesetzten Werkzeuge nach dem Einsetzen zuverlässig arretiert werden, damit sie während des laufenden Betriebs nicht herausgeschleudert werden können. Hierzu weist die Hohlwelle mindestens eine Ausnehmung auf, in oder an der jeweils ein geeignet geformter Anpresskörper angeordnet ist, der mittels mindestens eines Federelements mit einer gewissen Federkraft radial nach innen gedrückt wird. Dabei kann das mindestens eine Federelement den oder die Anpresskörper entweder unmittelbar oder mittelbar über ein Zwischenstück radial nach innen drücken, beispielsweise mittels einer Manschette mit konisch zulaufenden Innenwänden, die durch das mindestens eine Federelement in axialer Richtung gegen die Anpresskörper gedrückt wird, so dass die Anpresskörper durch die Manschette nach innen gedrückt werden. Wenn eine Welle eines Werkzeugs in die Halterungs- und Antriebsvorrichtung eingeschoben wird, dann werden die Anpressköper durch die Ausnehmungen in der Hohlwelle hindurch gegen die Welle des jeweiligen Werkzeugs gedrückt, und das Werkzeug wird in axialer Richtung fixiert und arretiert. Das Werkzeug kann beispielsweise eine umlaufende Nut aufweisen, in die die Anpresskörper hineingedrückt werden und die Welle des Werkzeugs so fixieren. Die Arretierung der Welle des Werkzeugs in axialer Richtung funktioniert auch dann, wenn die Welle des Werkzeugs mit einer von der Hohlwelle verschiedenen Geschwindigkeit angetrieben wird. Beispielsweise wird ein Werkzeug des zweiten Typs, dessen Welle in die zweite Passungsaufnahme eingesteckt wird, durch das weitere Kupplungsstück mit einer von der Hohlwelle verschiedenen Drehgeschwindigkeit angetrieben. In diesem Fall rotiert die Welle des Werkzeugs vom zweiten Typ mit einer von der Hohlwelle abweichenden Geschwindigkeit. Auch eine Rotation mit unterschiedlicher Drehrichtung ist möglich. Auch in diesem Fall ermöglichen die federnd gelagerten Anpresskörper eine Arretierung der Welle in axialer Richtung, indem sie beispielsweise in eine umlaufende Rille des Werkzeugs des zweiten Typs gedrückt werden. Da sich die Welle des Werkzeugs des zweiten Typs relativ zu den Anpresskörpern dreht, wirken die gegen die Welle gedrückten Anpresskörper dabei zugleich als Drehlager für die rotierende Welle des zweiten Typs von Werkzeug. Die rotierende Welle wird also einerseits durch den Eingriff der Anpresskörper in die Rille fixiert und arretiert, andererseits wird dennoch eine freie Drehung der Welle innerhalb des durch die Anpresskörper gebildeten Drehlagers ermöglicht.

Eine erfindungsgemäße Getriebeeinheit für eine Küchenmaschine umfasst eine Halterungs- und Antriebsvorrichtung wie oben beschrieben, eine erste Planetengetriebestufe, wobei ein erstes Planetenrad der ersten Planetengetriebestufe mit der rotierbaren Hohlwelle verbunden ist und die rotierbare Hohlwelle antreibt, und eine zweite Planetengetriebestufe, wobei ein zweites Planetenrad der zweiten Planetengetriebestufe mit dem weiteren Kupplungsstück verbunden ist und das weitere Kupplungsstück antreibt. Dabei kann das erste Planetenrad der ersten Planetengetriebestufe die rotierbare Hohlwelle mit einer ersten Drehgeschwindigkeit antreiben, wohingegen das zweite Planetenrad der zweiten Planetengetriebestufe das weitere Kupplungsstück mit einer zweiten Drehgeschwindigkeit antreiben kann. Auf diese Weise können für unterschiedliche Werkzeuge mit unterschiedlicher Drehgeschwindigkeit vorgesehen werden, wobei die Halterungs- und Antriebsvorrichtung trotz der unterschiedlichen Drehgeschwindigkeiten eine zuverlässige Fixierung der Wellen der Werkzeuge ermöglicht.

### Bevorzugte Ausgestaltungen der Erfindung

Vorzugsweise weist die Halterungs- und Antriebsvorrichtung eine Mehrzahl von Anpresskörpern auf, die in einer bestimmten Höhe der Hohlwelle um die Hohlwelle umlaufend angeordnet sind. Dadurch ist es möglich, eine eingesteckte Welle symmetrisch von unterschiedlichen Richtungen aus mittels der federnd gelagerten Anpresskörper zu fixieren. Dadurch wird eine symmetrische Fixierung und Arretierung der Welle erzielt, so dass Unwuchten vermieden werden.

Vorzugsweise ist die rotierbare Hohlwelle koaxial zu dem weiteren Kupplungsstück angeordnet. Vorzugsweise fällt die Achse einer von der rotierbaren Hohlwelle antreibbaren Welle eines Werkzeugs des ersten Typs mit der Achse einer von dem weiteren Kupplungsstück antreibbaren Welle eines Werkzeugs des zweiten Typs zusammen. Die Halterungs- und Antriebsvorrichtung weist eine gemeinsame Einstecköffnung auf, in die sowohl die Werkzeuge des ersten Typs als auch die Werkzeuge des zweiten Typs eingesteckt werden können. Die eingesteckten Werkzeuge gelangen entweder mit der Hohlwelle oder mit dem weiteren Kupplungsstück in Eingriff, wobei infolge der koaxialen Anordnung der Hohlwelle und des weiteren Kupplungsstücks die Drehachsen der beiden Typen von Werkzeugen übereinstimmen.

Vorzugsweise ist die Hohlwelle mit einer ersten Drehgeschwindigkeit antreibbar und das weitere Kupplungsstück ist mit einer von der ersten Drehgeschwindigkeit verschiedenen zweiten Drehgeschwindigkeit antreibbar. Innerhalb der Halterungs- und Antriebsvorrichtung können somit durch die Hohlwelle und das weitere Kupplungsstück unterschiedliche Antriebsgeschwindigkeiten bereitgestellt werden. Dabei können die Hohlwelle und das weitere Kupplungsstück mit gleicher Drehrichtung oder mit unterschiedlicher Drehrichtung angetrieben werden.

Vorzugsweise handelt es sich bei dem Werkzeug um ein Knet- oder Rührwerkzeug. Derartige Werkzeuge wie beispielsweise Rührer, Schneebesen, Knethaken etc. können in die Halterungs- und Antriebsvorrichtung der Küchenmaschine eingesteckt und rotierend angetrieben werden.

Vorzugsweise handelt es sich bei dem mindestens einen Anpresskörper um mindestens eine Kugel, die durch entsprechende Ausnehmungen in der Hohlwelle hindurch durch das mindestens eine Federelement radial nach innen drückbar ist. Die Kugeln können mittels des mindestens einen Federelements gegen die Welle des Werkzeugs gedrückt werden und beispielsweise in eine Nut oder in eine Rille des Werkzeugs hineingedrückt werden. Beim Herausziehen des Werkzeugs werden die Kugeln durch Aufbringen einer Kraft aus der Nut oder Rille herausgedrückt, um das Werkzeug wieder entnehmen zu können.

Vorzugsweise handelt es sich bei dem mindestens einen Anpresskörper um eine Mehrzahl von Wälzkörpern, die in einem Wälzkörperkäfig angeordnet sind. Durch den Wälzkörperkäfig können die Wälzkörper so gelagert werden, dass sie als Drehlager für eine eingesteckte Welle eines Werkzeugs dienen können. Dabei sind die Wälzkörper im Wälzkörperkäfig so gelagert, dass sie in radialer Richtung federnd nach innen gedrückt werden. Dabei können die Wälzkörper beispielsweise unmittelbar durch das mindestens eine Federelement nach innen gedrückt werden. Die Wälzkörper können aber beispielsweise auch mittelbar mittels einer Hülse oder Manschette mit konisch zulaufenden Innenwänden nach innen gedrückt werden, die durch das mindestens eine Federelement in axialer Richtung gedrückt wird.

Vorzugsweise handelt es sich bei dem mindestens einen Federelement um ein C-förmiges Federelement, das an der Außenseite der Hohlwelle angeordnet die Hohlwelle zumindest teilweise umschließt. Das C-förmige Federelement wird von außen auf die Hohlwelle aufgesteckt. Das C-förmige Federelement lässt sich einfach auf die Hohlwelle aufstecken und ermöglicht daher eine schnelle Montage. Vorzugsweise ist das an der Außenseite der Hohlwelle anliegende Federelement dazu ausgelegt, die Anpresskörper zu erfassen und von außen radial nach innen zu drücken.

Vorzugsweise weist die Halterungs- und Antriebsvorrichtung ein oberes Lager und ein unteres Lager zur rotierbaren Lagerung der Hohlwelle auf. Mittels der zwei voneinander beabstandeten Lager können die auf die eingesteckten Werkzeuge und die Hohlwelle aufgebrachten Kräfte aufgenommen werden. Vorzugsweise ist der mindestens eine Anpresskörper auf einer bestimmten Höhe zwischen dem oberen Lager und dem unteren Lager um die Außenseite der Hohlwelle herum angeordnet. Zwischen dem unteren Lager und dem oberen Lager ist ausreichend Platz für die Anbringung der Arretiervorrichtung vorhanden.

Vorzugsweise ist die Hohlwelle für den Antrieb von Werkzeugen des ersten Typs ausgebildet, zu deren Betrieb ein vergleichsweise hohes Drehmoment bei vergleichsweise niedriger Drehzahl erforderlich ist. Die Hohlwelle wird von dem Getriebe der Küchenmaschine mit einer vergleichsweise niedrigen Drehgeschwindigkeit angetrieben und eignet sich daher zum Antrieb von Werkzeugen des ersten Typs, zu denen beispielsweise Knetwerkzeuge wie ein Knethaken gehören. Bei diesen Werkzeugen kommt es in erster Linie auf die Bereitstellung eines ausreichenden Drehmoments an.

Vorzugsweise ist in die Hohlwelle eine Welle eines Werkzeugs des ersten Typs einschiebbar und das Werkzeug des ersten Typs ist durch die Hohlwelle antreibbar. Vorzugsweise ist in die Hohlwelle eine Welle eines Werkzeugs des ersten Typs einschiebbar, wobei ein an der Welle des Werkzeugs des ersten Typs angebrachtes erstes Passungsstück in der ersten Passungsaufnahme formschlüssig aufnehmbar ist. Durch die Aufnahme des ersten Passungsstücks in der komplementär dazu ausgebildeten ersten Passungsaufnahme in der Hohlwelle wird eine drehfeste Kupplung zwischen der Hohlwelle und der Welle des Werkzeugs des ersten Typs hergestellt, sodass das Werkzeug durch die Hohlwelle antreibbar ist. Dabei können das erste Passungsstück und die erste Passungsaufnahme ein geeignetes Passungsprofil aufweisen, beispielsweise ein polygonales Mitnahmeprofil, insbesondere ein Sechskantprofil.

Vorzugsweise ist der mindestens eine Anpresskörper durch die Federkraft des mindestens einen Federelements radial nach innen gegen eine eingesteckte Welle eines Werkzeugs des ersten Typs drückbar. Vorzugsweise wirkt der mindestens eine radial nach innen gedrückte Anpresskörper als Arretierung in axialer Richtung für eine eingesteckte Welle eines Werkzeugs des ersten Typs. Durch die gegen die Welle gepressten Anpresskörper wird die Welle des ersten Werkzeugs in der eingesteckten Position fixiert. Insbesondere wird dadurch verhindert, dass das Werkzeug während des laufenden Betriebs herausgeschleudert werden kann.

Vorzugsweise ist der mindestens eine Anpresskörper durch die Federkraft des mindestens einen Federelements in eine umlaufende Nut oder in mindestens eine Aussparung in einer eingesteckten Welle eines Werkzeugs des ersten Typs drückbar und dazu ausgelegt, das Werkzeug des ersten Typs in axialer Richtung zu fixieren. Das Werkzeug des ersten Typs steht über das erste Passungsstück mit der ersten Passungsaufnahme der Hohlwelle in Eingriff und wird daher durch die Hohlwelle angetrieben. Daher dreht sich die Welle des Werkzeugs des ersten Typs mit der gleichen Geschwindigkeit, mit der auch die Hohlwelle rotiert. Indem nun die federnd gelagerten Anpresskörper in eine umlaufende Nut oder in die mindestens eine Aussparung der Welle einrasten bzw. einschnappen, wird das Werkzeug des ersten Typs in der eingesteckten Position fixiert.

Vorzugsweise erfolgt durch den mindestens einen radial nach innen gedrückten Anpresskörper eine Fixierung einer Welle eines Werkzeugs des ersten Typs, wobei das Werkzeug des ersten Typs nur durch Aufbringen einer Mindestlösekraft aus der Halterungs- und Antriebsvorrichtung herausziehbar ist. Zum Herausziehen des Werkzeugs muss die Federkraft überwunden werden, mit der die Anpresskörper gegen die Welle gepresst werden. Sofern die Welle eine umlaufende Rille aufweist, in die die Anpresskörper eingreifen, ist es außerdem erforderlich, die Anpresskörper entgegen der Federkraft des Federelements aus der Rille zu drücken. Hierfür ist eine gewisse Mindestlösekraft erforderlich.

Vorzugsweise ist das weitere Kupplungsstück für den Antrieb von Werkzeugen des zweiten Typs ausgebildet, zu deren Betrieb ein vergleichsweise niedriges Drehmoment bei vergleichsweise hoher Drehzahl erforderlich ist. Das weitere Kupplungsstück wird durch das Getriebe der Küchenmaschine mit einer vergleichsweise hohen Drehgeschwindigkeit angetrieben und eignet sich daher zum Antrieb von Werkzeugen, bei denen es auf eine hohe Drehgeschwindigkeit und weniger auf ein hohes Drehmoment ankommt, beispielsweise zum Antrieb von Quirls oder Schneebesen.

Vorzugsweise ist in das weitere Kupplungsstück durch die Hohlwelle hindurch eine Welle eines Werkzeugs des zweiten Typs einschiebbar und das Werkzeug des zweiten Typs ist durch das weitere Kupplungsstück antreibbar. Das weitere Kupplungsstück ist oberhalb der Hohlwelle angeordnet und rotiert während des Betriebs mit einer höheren Drehgeschwindigkeit als die Hohlwelle. Zur Kupplung des Werkzeugs des zweiten Typs mit dem weiteren Kupplungsstück wird die Welle des Werkzeugs des zweiten Typs durch die langsamer rotierende Hohlwelle hindurch in das weitere Kupplungsstück eingeschoben, um so eine drehfeste Kupplung mit dem weiteren Kupplungsstück auszubilden.

Vorzugsweise ist in das weitere Kupplungsstück durch die Hohlwelle hindurch eine Welle eines Werkzeugs des zweiten Typs einschiebbar, wobei ein an der Welle des Werkzeugs des zweiten Typs angebrachtes zweites Passungsstück in der zweiten Passungsaufnahme formschlüssig aufnehmbar ist. Durch die Aufnahme des zweiten Passungsstücks in der dazu komplementär ausgebildete zweite Passungsaufnahme wird eine drehfeste Kupplung zwischen dem weiteren Kupplungsstück und der Welle des Werkzeugs des zweiten Typs hergestellt. Hierzu weisen das zweite Passungsstück und die zweite Passungsaufnahme vorzugsweise ein geeignetes Passungsprofil auf, beispielsweise ein polygonales Mitnahmeprofil, insbesondere ein Sechskantprofil.

Vorzugsweise ist eine durch das weitere Kupplungsstück angetriebene Welle eines Werkzeugs des zweiten Typs mit einer von der Drehgeschwindigkeit der Hohlwelle verschiedenen Drehgeschwindigkeit antreibbar. Daher rotiert die Welle des Werkzeugs des zweiten Typs innerhalb der Hohlwelle mit einer höheren Drehgeschwindigkeit als die Hohlwelle selbst.

Vorzugsweise wirkt der mindestens eine radial nach innen gedrückte Anpresskörper als Gleit-, Roll- oder Wälzlager für eine eingesteckte Welle eines Werkzeugs des zweiten Typs. Vorzugsweise ist der mindestens eine Anpresskörper durch die Federkraft des mindestens einen Federelements gegen eine eingesteckte Welle eines mit einer von der Hohlwelle abweichenden Drehgeschwindigkeit rotierenden Werkzeugs des zweiten Typs drückbar, wobei der mindestens eine radial nach innen gedrückte Anpresskörper als Gleit-, Roll- oder Wälzlager für die eingesteckte Welle des Werkzeugs des zweiten Typs wirkt. Da sich die Welle des Werkzeugs des zweiten Typs relativ zur Hohlwelle dreht, werden die Anpresskörper gegen eine sich drehende Welle gedrückt und wirken somit als Drehlager, insbesondere als Gleit-, Roll- oder Wälzlager für die Welle des Werkzeugs des zweiten Typs. Durch die von allen Seiten federnd angepressten Anpresskörper wird eine stabile Führung der rotierenden Welle erzielt.

Vorzugsweise ist der mindestens eine Anpresskörper durch die Federkraft des mindestens einen Federelements gegen eine Rille in einer eingesteckten Welle eines Werkzeugs des zweiten Typs drückbar. Die federnd gelagerten Anpresskörper greifen dann in die Rille in der Welle des Werkzeugs des zweiten Typs ein, ermöglichen aber dennoch eine Drehung der Welle relativ zur Hohlwelle.

Vorzugsweise ist der mindestens eine Anpresskörper durch die Federkraft des mindestens einen Federelements gegen eine Rille in einer eingesteckten Welle eines Werkzeugs des zweiten Typs drückbar und dazu ausgelegt, das Werkzeug des zweiten Typs in axialer Richtung zu fixieren. Durch die gegen die Rille in der eingesteckten Welle gedrückten Anpresskörper wird die Welle in axialer Richtung fixiert und am Herausrutschen gehindert. Dennoch wird durch die von allen Seiten in die Rille gepressten Anpresskörper eine Rotation der Welle des Werkzeugs des zweiten Typs relativ zur Hohlwelle ermöglicht. Insofern dienen die federnd gelagerten Anpresskörper sowohl zur Fixierung der Welle in axialer Richtung als auch als Drehlager für die innerhalb der Hohlwelle rotierende Welle des Werkzeugs des zweiten Typs.

Vorzugsweise umfasst die Halterungs- und Antriebsvorrichtung eine Manschette mit konisch zulaufender Innenwandung, wobei das mindestens eine Federelement dazu ausgelegt ist, die Manschette in axialer Richtung gegen den mindestens einen Anpresskörper zu drücken, wobei der mindestens eine Anpresskörper durch die konisch zulaufende Innenwandung der federnd angedrückten Manschette radial nach innen drückbar ist.

Vorzugsweise umfasst die Halterungs- und Antriebsvorrichtung eine am unteren Ende der Hohlwelle angeordnete umlaufende Manschette mit mindestens einer zum unteren Ende der Hohlwelle hin konisch zulaufenden Tasche zur Aufnahme des mindestens einen Anpresskörpers, wobei das mindestens eine Federelement dazu ausgebildet ist, die umlaufende Manschette in axialer Richtung nach oben gegen das untere Ende der Hohlwelle zu drücken. Die umlaufende Manschette weist Taschen zur Halterung der Anpresskörper auf, die sich nach oben hin konisch aufweiten und in denen die Anpresskörper gelagert sind. Diese Manschette wird durch das mindestens eine Federelement in axialer Richtung nach oben gegen die Hohlwelle gedrückt.

Vorzugsweise ist das mindestens eine Federelement dazu ausgebildet, die umlaufende Manschette in axialer Richtung nach oben gegen das untere Ende der Hohlwelle zu drücken, wobei der in der mindestens einen Tasche befindliche mindestens eine Anpresskörper durch das mindestens eine Federelement infolge der konischen Ausbildung der mindestens einen Tasche radial nach innen drückbar ist. Wenn die Manschette durch das mindestens eine Federelement nach oben gedrückt wird, führt dies dazu, dass die Anpresskörper infolge der konischen Form der Taschen radial nach innen gedrückt werden.

Vorzugsweise ist die umlaufende Manschette zum Lösen des mindestens einen Anpresskörpers in axialer Richtung entgegen einer Federkraft des mindestens einen Federelements von der Hohlwelle manuell nach unten ziehbar, so dass der in der mindestens einen konisch zulaufenden Tasche gelagerte mindestens eine Anpresskörper nicht mehr radial nach innen drückbar ist und ein in die Halterungs- und Antriebsvorrichtung eingestecktes Werkzeug entnehmbar ist. Indem die Manschette manuell nach unten gezogen wird, werden auch die konisch zulaufenden Taschen nach unten bewegt, sodass die darin gelagerten Anpresskörper mehr Platz zur Verfügung haben und nicht mehr radial nach innen gedrückt werden. Dadurch wird die eingesteckte Welle eines Werkzeugs freigegeben und das Werkzeug kann entnommen werden.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1:: Fig. 1 zeigt eine Ansicht einer Küchenmaschine mit einer in den Arm der Küchenmaschine integrierten Getriebeeinheit.
- Figur 2:: Fig. 2 zeigt eine schematische Darstellung der Getriebestufen einer Getriebeeinheit.
- Figur 3:: Fig. 3 zeigt eine detaillierte Darstellung der Getriebeeinheit im Längsschnitt.
- Figur 4:: Fig. 4 zeigt eine Halterungs- und Antriebsvorrichtung für rotierende Rühr- oder Knetwerkzeuge.
- Figur 5:: Fig. 5 zeigt eine Explosionsdarstellung der Halterungs- und Antriebsvorrichtung zusammen mit der Arretiervorrichtung.
- Figur 6:: Fig. 6 zeigt eine Halterungs- und Antriebsvorrichtung, in die ein Werkzeug des ersten Typs eingesteckt ist.
- Figur 7:: Fig. 7 zeigt eine Halterungs- und Antriebsvorrichtung mit einem eingesteckten Werkzeug des zweiten Typs.
- Figur 8:: Fig. 8 zeigt ein weiteres Beispiel einer Arretiervorrichtung, die am unteren Ende der Hohlwelle angebracht ist.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

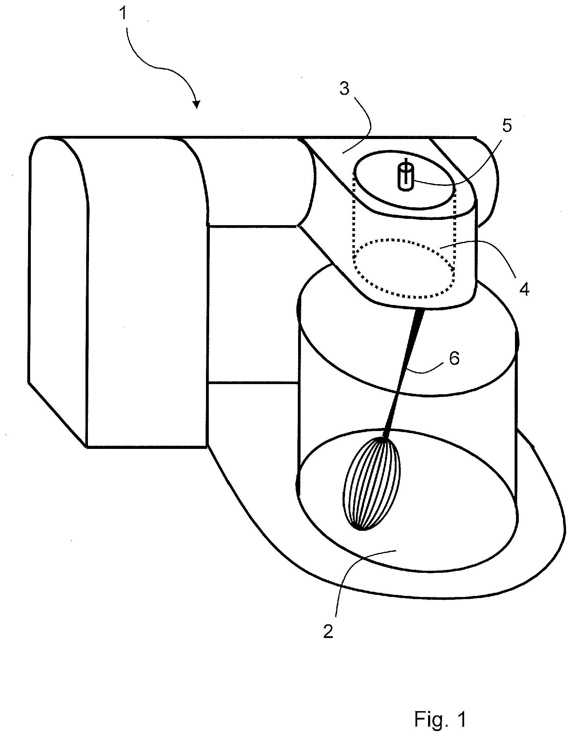

In Figur 1 ist eine Küchenmaschine 1 mit einer Rührschüssel 2 gezeigt, wobei die Küchenmaschine 1 über einen Arm 3 verfügt, der zum Auswechseln der Werkzeuge hochgeklappt werden kann. In den Arm 3 der Küchenmaschine ist eine Getriebeeinheit 4 integriert, die an ihrer Oberseite eine oder mehrere abtriebsseitige erste Ausgangswellen 5 zur Verfügung stellt, mit denen eine Mehrzahl von unterschiedlichen Aufsätzen wie beispielsweise ein Mixer oder ein Universalzerkleinerer angetrieben werden kann. Hierzu kann beispielsweise an der Oberseite des Arms 3 oberhalb der Getriebeeinheit 4 eine entsprechende Bajonettkupplung vorgesehen sein. An der Unterseite der Getriebeeinheit 4 werden ein oder mehrere Kupplungsstücke für abtriebsseitige zweite Ausgangswellen zur Verfügung gestellt, die in einer rotierenden Trägereinheit gelagert sind und rotierend umlaufen. Diese Kupplungsstücke für zweite Ausgangswellen an der Unterseite der Getriebeeinheit 4 können beispielsweise zum Antrieb eines Rühr- oder Knetwerkzeugs 6, beispielsweise eines Knethakens oder eines Schneebesens genutzt werden. Die Kupplungsstücke für die zweiten Ausgangswellen werden vorzugsweise durch Planetenräder eines Planetengetriebes angetrieben, wobei ein Planetenrad das jeweilige Kupplungstück antreibt, in das eine Antriebswelle für ein Knet- oder Rührwerkzeug eingeschoben werden kann. Darüber hinaus kann auch die rotierbare Trägereinheit selbst, die mit dem Planetenträger des Planetengetriebes verbunden ist, als Zapfwelle mit stark untersetzter Drehzahl zum Antrieb von Werkzeugen benutzt werden.

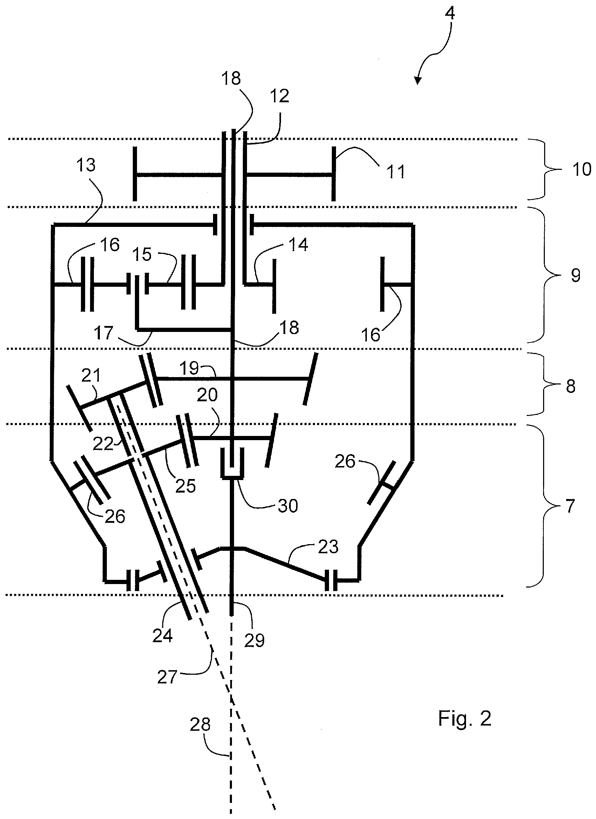

In Figur 2 ist eine schematische Ansicht der Getriebeeinheit 4 gezeigt, aus der zunächst erkennbar ist, dass die Getriebeeinheit 4 vier übereinander angeordnete Getriebestufen 7, 8, 9 und 10 umfasst, nämlich in der Reihenfolge von unten nach oben eine erste Getriebestufe 7, eine zweite Getriebestufe 8, eine dritte Getriebestufe 9 und eine vierte Getriebestufe 10. Die einzelnen Getriebestufen 7, 8, 9 und 10 sind übereinander angeordnet und konzentrisch zueinander ausgebildet, wobei jede der Getriebestufen 7 bis 10 als drehsymmetrische Getriebestufe realisiert ist. Die vierte Getriebestufe 10 ist als Antriebsstufe der Getriebeeinheit 4 ausgebildet und umfasst eine Riemenscheibe 11, die mittels eines Zahnriemens von der Motoreinheit aus antreibbar ist. Die Riemenscheibe 11 ist mit einer antriebsseitigen Eingangswelle 12 verbunden, die als Hohlwelle ausgebildet ist. Diese antriebsseitige Eingangswelle 12 wird an der Oberseite der Getriebeeinheit 4 als Zapfwelle zur Verfügung gestellt und kann beispielsweise zum Antrieb eines Universalzerkleinerers, eines Hobels, einer Reibe etc. genutzt werden. Die erste, zweite und dritte Getriebestufe 7, 8, 9 sind innerhalb eines gemeinsamen Gehäuses 13 der Getriebeeinheit 4 übereinander angeordnet untergebracht. Dabei sind die erste, zweite und dritte Getriebestufe 7, 8, 9 jeweils als Planetengetriebestufen ausgebildet, wobei die erste und zweite Getriebestufe 7 und 8 eine Kegelradverzahnung aufweisen. Alternativ dazu könnten diese Planetengetriebestufen auch mit Stirnrädern anstatt von Kegelrädern realisiert werden.

Das dritte Sonnenrad 14 der dritten Getriebestufe 9 ist mit der antriebsseitigen Eingangswelle 12 verbunden. Wenn sich die Riemenscheibe 11 dreht, wird daher auch das dritte Sonnenrad 14 in Rotation versetzt. Die dritte Getriebestufe 9 umfasst außerdem mindestens ein drittes Planetenrad 15, das sowohl mit dem dritten Sonnenrad 14 als auch mit dem zweiten innenverzahnten Zahnkranz 16 kämmt, der an der Innenseite des Gehäuses 13 angebracht bzw. angeformt ist. Das mindestens eine dritte Planetenrad 15 ist an einem Planetenträger 17 gelagert, der mit der abtriebsseitigen Ausgangswelle 18 verbunden ist, die den oberen Abschnitt einer zentralen Welle bildet. Die abtriebsseitige Ausgangswelle 18 wird an der Oberseite der Getriebeeinheit 4 als Zapfwelle zur Verfügung gestellt und verläuft koaxial zur antriebsseitigen Eingangswelle 12, die als Hohlwelle ausgebildet ist und die abtriebsseitige Ausgangswelle 18 konzentrisch umschließt. Wenn das dritte Sonnenrad 14 in Rotation versetzt wird, bewegt sich das mindestens eine dritte Planetenrad 15 um das dritte Sonnenrad 14 herum und versetzt so den Planetenträger 17 in Rotation, der mit der abtriebsseitigen Ausgangswelle 18 verbunden ist. Dabei ist die Rotationsgeschwindigkeit des Planetenträgers 17 in der Regel geringer als die Rotationsgeschwindigkeit der antriebsseitigen Eingangswelle 12. Die abtriebsseitige Ausgangswelle 18 kann daher zum Antrieb von Aufsätzen verwendet werden, die eine vergleichsweise geringe Rotationsgeschwindigkeit benötigen, beispielsweise zum Antrieb eines Würfelschneiders oder einer Zitruspresse. Durch das Bereitstellen von mehreren koaxial zueinander ausgebildeten Zapfwellen an der Oberseite der Getriebeeinheit 4 können verschiedene Zubehörteile mit unterschiedlichen Anforderungen in Bezug auf Rotationsgeschwindigkeit und Drehmoment angetrieben werden.

Die abtriebsseitige Ausgangswelle 18 treibt darüber hinaus das zweite Sonnenrad 19 der zweiten Getriebestufe 8 sowie das erste Sonnenrad 20 der ersten Getriebestufe 7 an, die in dem in Figur 2 gezeigten Beispiel jeweils als Kegelräder ausgebildet sind. Innerhalb der zweiten Getriebestufe 8 ist ein zweites Planetenrad 21 vorgesehen, das mit dem zweiten Sonnenrad 19 kämmt und mit einem Kupplungsstück 22 für eine Ausgangswelle verbunden ist. Das Kupplungsstück 22 ist innerhalb der rotierbaren Trägereinheit 23 koaxial zu einer Hohlwelle 24 rotierbar gelagert und bewegt sich mit dem rotierbaren Trägereinheit 23 mit. Die Hohlwelle 24 ist ebenfalls in der rotierbaren Trägereinheit 23 rotierbar gelagert. Die Hohlwelle 24 wird durch die erste Getriebestufe 7 angetrieben und ist mit dem ersten Planetenrad 25 verbunden. Das erste Planetenrad 25 kämmt mit dem ersten Sonnenrad 20 sowie mit dem ersten innenverzahnten Zahnkranz 26, der an der Innenseite des Gehäuses 13 angebracht bzw. angeformt ist.

Infolge der Kegelradgeometrie verläuft die Ache 27 des Kupplungsstücks 22 und der Hohlwelle 24 schräg geneigt zur zentralen Achse 28 der Getriebeeinheit 4. Wenn das erste Planetenrad 25 durch das erste Sonnenrad 20 angetrieben wird, wird das erste Planetenrad 25 am ersten innenverzahnten Zahnkranz 26 abgewälzt. Das erste Planetenrad 25 bewegt sich um das erste Sonnenrad 20 herum und rotiert dabei um die eigene Achse. Insofern bewegen sich das Kupplungsstück 22 und die Hohlwelle 24 in einer Taumelbewegung rund um die zentrale Achse 28 der Getriebeeinheit 4, wobei das Kupplungsstück 22 und die Hohlwelle 24 dabei mit unterschiedlichen Geschwindigkeiten um die eigene Achse rotieren. Das Kupplungsstück 22 und die Hohlwelle 24 können entweder mit übereinstimmender oder mit unterschiedlicher Drehrichtung angetrieben werden. Dabei hängt es von den Zahnzahlen von zweitem Planetenrad 21, zweitem Sonnenrad 19, erstem Planetenrad 25 und erstem Sonnenrad 20 ab, ob das Kupplungsstück 22 und die Hohlwelle 24 mit gleicher oder mit unterschiedlicher Drehrichtung angetrieben werden.

Sowohl das Kupplungsstück 22 als auch die Hohlwelle 24 können von der Unterseite der Getriebeeinheit 4 aus zum Antrieb von in die Getriebeeinheit 4 eingesteckten Knet- und Rührwerkzeugen genutzt werden, mit denen in der Rührschüssel 2 befindliches Rührgut aufgeschlagen, durchmischt bzw. geknetet werden kann. Das Kupplungsstück 22 rotiert mit höherer Geschwindigkeit als die Hohlwelle 24 und eignet sich daher insbesondere zum Antrieb eines Schneebesens. Dagegen stellt die mit langsamerer Drehgeschwindigkeit rotierende Hohlwelle 24 ein deutlich größeres Drehmoment zur Verfügung und eignet sich daher insbesondere zum Antrieb eines Knethakens, mit dem auch schwere Teige verarbeitet werden können. Durch die Bereitstellung des Kupplungsstücks 22 und der Hohlwelle 24 können verschiedene Rühr- und Knetwerkzeuge mit jeweils passender Geschwindigkeit und passender Drehrichtung und passendem Drehmoment angetrieben werden.

Alternativ dazu könnten als Zahnräder der Planetengetriebestufen auch Stirnräder anstelle von Kegelrädern verwendet werden. in diesem Fall würden die Drehachsen der Planetenräder parallel zur zentralen Achse der Getriebeeinheit stehen und zusammen mit der rotierbaren Trägereinheit um die zentrale Achse der Getriebeeinheit umlaufen.

Wenn das erste Planetenrad 25 angetrieben vom ersten Sonnenrad 20 am ersten innenverzahnten Zahnkranz 26 abgewälzt wird, wird durch diesen Umlauf des ersten Planetenrads 25 die rotierbare Trägereinheit 23 angetrieben und in eine Rotationsbewegung versetzt. In der rotierbaren Trägereinheit 23 sind das Kupplungsstück 22 und die Hohlwelle 24 jeweils rotierbar gelagert, die daher mit der rotierbaren Trägereinheit 23 mitrotieren. Die rotierbare Trägereinheit 23 ist mit der abtriebsseitigen Ausgangswelle 29 verbunden, die durch die rotierbare Trägereinheit 23 in eine vergleichsweise langsame Rotation versetzt wird. Die abtriebsseitige Ausgangswelle 29 stellt den unteren Abschnitt der zentralen Welle der Getriebeeinheit 4 dar und ist über ein Drehlager 30 mit der abtriebsseitigen Ausgangswelle 18 gekoppelt. Die abtriebsseitige Ausgangswelle 29 kann an der Unterseite der Getriebeeinheit 4 als Zapfwelle für Zusatzgeräte genutzt werden, die eine vergleichsweise langsam rotierende Antriebswelle benötigen. Beispielsweise kann die abtriebsseitige Ausgangswelle 29 zum Antrieb eines Fleischwolfs, einer Getreidemühle, eines Pastavorsatzes, eines Eisbereiters etc. genutzt werden.

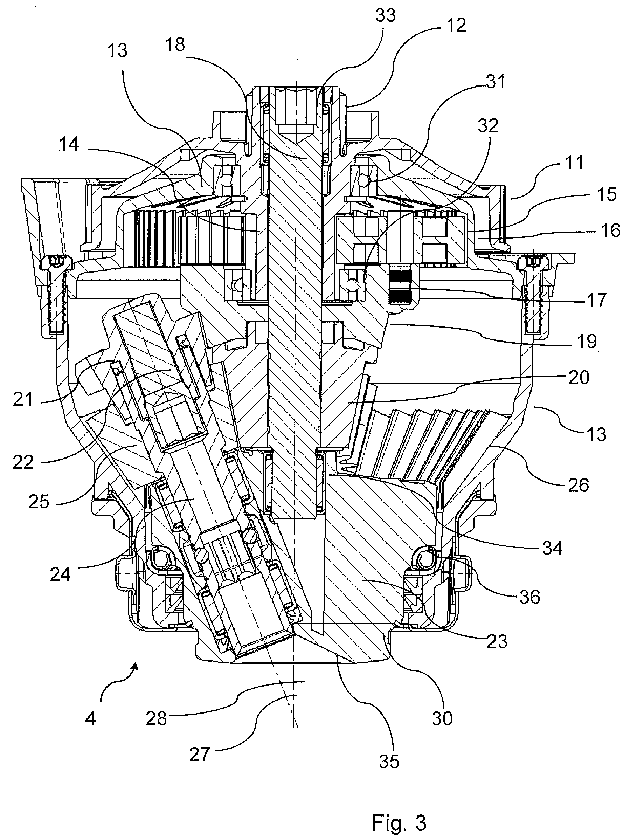

Figur 3 zeigt eine detaillierte Darstellung der Getriebeeinheit 4 im Längsschnitt, wobei die einzelnen Komponenten der Getriebeeinheit 4 bereits anhand der in Figur 2 gezeigten Schemadarstellung erläutert worden waren. In Figur 3 ist die Riemenscheibe 11 erkennbar, die mittels eines Zahnriemens angetrieben und in Rotation versetzt werden kann. Wie in Figur 3 gezeigt ist, ist die Riemenscheibe 11 noch oberhalb des Deckels des Gehäuses 13 angeordnet und überdeckt den oberen Teil des Gehäuses. Mit der Riemenscheibe 11 ist die antriebsseitige Eingangswelle 12 verbunden, die als Hohlwelle ausgebildet ist und an der Oberseite der Getriebeeinheit 4 als Zapfwelle zur Verfügung steht. Die Riemenscheibe ist darüber hinaus mit dem dritten Sonnenrad 14 der dritten Getriebestufe 9 verbunden, die unmittelbar unterhalb des Deckels des Gehäuses 13 angeordnet ist. Die dritte Getriebestufe 9 umfasst außerdem das mindestens eine dritte Planetenrad 15 sowie den zweiten innenverzahnten Zahnkranz 16. Unterhalb des mindestens einen dritten Planetenrads 15 ist der Planetenträger 17 zu erkennen, der seinerseits mit der zentralen abtriebsseitigen Ausgangswelle 18 verbunden ist, die an der Oberseite der Getriebeeinheit 4 nach außen austritt. Durch die Umlaufbewegung des mindestens einen dritten Planetenrads 15 um das dritte Sonnenrad 14 wird auch der Planetenträger 17 in eine Drehbewegung versetzt. Dabei sind zur Lagerung der antriebsseitigen Eingangswelle 12, des dritten Sonnenrads 14 sowie des Planetenträgers 17 zwei Wälzlager 31 und 32 vorgesehen. Der Planetenträger 17 ist mit der zentralen abtriebsseitigen Ausgangswelle 18 verbunden, die an der Oberseite der Getriebeeinheit 4 herausgeführt ist und über ein Mitnahmeprofil 33 entsprechendes Zubehör antreiben kann. Dabei wird das untere Ende der abtriebsseitigen Ausgangswelle 18 in einem Axiallager 34 gelagert, beispielsweise in einem Nadellager.

Wie aus Figur 3 erkennbar ist, ist der untere Abschnitt des Planetenträgers 17 zugleich als zweites Sonnenrad 19 ausgebildet und steht in kämmendem Eingriff mit dem zweiten Planetenrad 21. Mit der abtriebsseitigen Ausgangswelle 18 ist darüber hinaus das erste Sonnenrad 20 drehfest verbunden, dass sich in kämmendem Eingriff mit dem ersten Planetenrad 25 befindet. Das erste Planetenrad 25 steht darüber hinaus in kämmendem Eingriff mit dem ersten innenverzahnten Zahnkranz 26, der in Figur 3 gut zu erkennen ist. Das zweite Planetenrad 21 ist mit dem Kupplungsstück 22 verbunden und treibt das zweite Kupplungsstück 22 an. In das zweite Kupplungsstück 22 kann vom Führungstrichter 35 an der Unterseite der Getriebeeinheit 4 aus ein Rühr- oder Knetwerkzeug eingesteckt werden. Das erste Planetenrad 25 ist mit der Hohlwelle 24 verbunden und treibt die Hohlwelle 24 an. Die Hohlwelle 24 weist im Inneren ein entsprechendes Passungsprofil auf, in das ein passendes Rühr- oder Knetwerkzeug eingesteckt werden kann. Insofern hängt es von dem Profil des Schafts des jeweiligen Rühr- oder Knetwerkzeugs ab, ob das Werkzeug durch das Kupplungsstück 22 oder durch die Hohlwelle 24 angetrieben wird.

Anhand von Figur 3 ist erkennbar, dass die Hohlwelle 24 innerhalb der rotierbaren Trägereinheit 23 drehbar gelagert ist. Dabei wird durch die Umlaufbewegung des ersten Planetenrads 25, das angetrieben vom ersten Sonnenrad 20 entlang des ersten innenverzahnten Zahnkranzes 26 abrollt, auch die Rotation der rotierbaren Trägereinheit 23 vorgegeben, die der Bewegung des ersten Planetenrads 25 folgt und somit als Planetenträger für das erste Planetenrad 25 fungiert. Dabei ist die rotierbare Trägerinheit 23 auf einem umlaufenden Wälzlager 36 gelagert. An die rotierbare Trägereinheit 23 ist ein nabenartiger Ansatz angeformt, der als abtriebsseitige Ausgangswelle 29 genutzt werden kann.

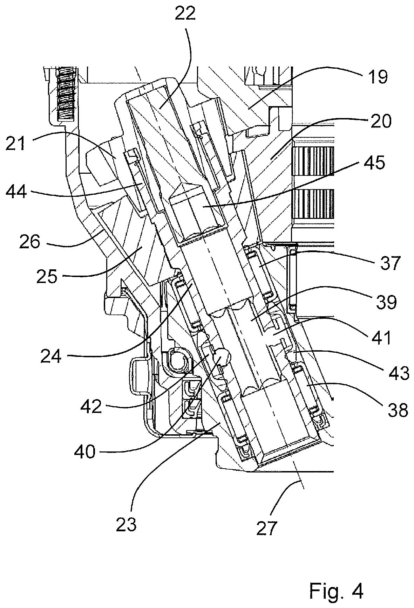

In Figur 4 ist die Halterungs- und Antriebseinheit für rotierende Rühr- oder Knetwerkzeuge zusammen mit der rotierbaren Trägereinheit 23 nochmals vergrößert herausgezeichnet. Die Halterungs- und Antriebseinheit ist in der rotierbaren Trägereinheit 23 gelagert und bewegt sich zusammen mit der rotierbaren Trägereinheit 23 um die zentrale Achse der Getriebeeinheit. In Figur 4 ist die Hohlwelle 24 zu erkennen, die sich durch das erste Planetenrad 25 hindurch erstreckt. Die Hohlwelle 24 ist mit dem ersten Planetenrad 25 fest verbunden und wird durch das erste Planetenrad 25 angetrieben. Das erste Planetenrad 25 ist Teil der ersten Getriebestufe 7 und steht einerseits mit dem ersten Sonnenrad 20 und andererseits mit dem ersten innenverzahnten Zahnkranz 26 in Eingriff. Wenn das erste Planetenrad 25 auf dem ersten innenverzahnten Zahnkranz 26 abrollt, wird dadurch zum einen eine Eigenrotation der Hohlwelle 24 um die Achse 27 verursacht und darüber hinaus eine Drehung der rotierbaren Trägereinheit 23 um die zentrale Achse der Getriebeeinheit 4 erzeugt. Dadurch führt die Hohlwelle 24 zwei überlagerte Drehbewegungen durch: Zum einen bewegt sich die Hohlwelle 24 mit der rotierbaren Trägereinheit 23 rotierend um die Drehachse der rotierbaren Trägereinheit 23 und darüber hinaus rotiert die Hohlwelle 24 um die eigene Achse 27. Dabei ist die Hohlwelle 24 wie in Figur 4 gezeigt durch ein oberes Lager 37 und ein unteres Lager 38 drehbar in der rotierbaren Trägereinheit 23 gelagert.

Die Hohlwelle 24 kann zum Antrieb einer in die Hohlwelle eingesteckten ersten Welle eines Werkzeugs des ersten Typs dienen. Hierzu ist die Hohlwelle 24 als Kupplungsstück ausgebildet und weist ein erstes Passungsprofil 39 auf, beispielsweise ein sechseckiges Passungsprofil. Wenn die erste Welle des Werkzeugs des ersten Typs ein Passungsstück aufweist, das zum ersten Passungsprofil 39 komplementär ist und beim Einschieben in die Hohlwelle 24 von dem ersten Passungsprofil 39 formschlüssig umfasst wird, dann wird zwischen der Hohlwelle 24 und der eingesteckten ersten Welle des Werkzeugs des ersten Typs eine drehfeste Kupplung ausgebildet. Das Werkzeug des ersten Typs kann dann durch die Hohlwelle 24 angetrieben werden.

Zur Arretierung der eingesteckten Welle des Werkzeugs des ersten Typs umfasst die in Figur 4 gezeigte Halterungs- und Antriebseinheit eine Arretiervorrichtung, die auf einer bestimmten Höhe der Hohlwelle 24 zwischen dem oberen Lager 37 und dem unteren Lager 38 angeordnet ist. Die Arretiervorrichtung umfasst mindestens eine Kugel 40, die in mindestens einer entsprechenden Ausnehmung 41 in der Hohlwelle 24 angeordnet ist. An der Außenseite der Hohlwelle 24 ist ein C-förmiges Federelement 42 angeordnet, das die Hohlwelle 24 zumindest teilweise umschließt. Durch dieses C-förmige Federelement 42 werden die Kugeln 40 erfasst und von außen radial nach innen gedrückt. Wenn eine erste Welle eines Werkzeugs des ersten Typs in die Hohlwelle 24 eingeschoben wird, dann werden die Kugeln 40 durch das C-förmige Federelement 42 radial nach innen gegen die erste Welle des Werkzeugs des ersten Typs gedrückt. Nun weist die erste Welle des Werkzeugs an der Position, an der sich die Kugeln 40 befinden, eine umlaufende Nut oder entsprechende Aussparungen auf, in die die Kugeln 40 eingreifen können. Dadurch wird die eingesteckte erste Welle des Werkzeugs durch die von außen angepressten Kugeln 40 in seiner eingesteckten Position arretiert und kann nicht mehr herausrutschen. Die Arretiervorrichtung wird durch einen an der Außenseite der Hohlwelle 24 umlaufend angeordneten Dichtungsbalg 43 nach außen hin abgedichtet. Dadurch wird verhindert, dass vom Getriebe aus Öl oder Fett ins Innere der Hohlwelle 24 vordrängen kann. Genau wie die Arretiervorrichtung dreht sich auch der an der Außenseite der Hohlwelle 24 angebrachte Dichtungsbalg 43 zusammen mit der Hohlwelle 24 mit.

Zur Bereitstellung eines weiteren Gangs mit einer schnelleren Umlaufgeschwindigkeit ist oberhalb der Hohlwelle 24 und des ersten Planetenrades 25 das zweite Planetenrad 21 angeordnet, das mit dem zweiten Sonnenrad 19 in Eingriff steht und durch dieses angetrieben wird. Zur rotierbaren Lagerung des zweiten Planetenrades 21 weist die Hohlwelle 24 an ihrem oberen Ende ein ringförmiges Drehlager 44 auf, auf das das zweite Planetenrad 21 rotierbar aufgesteckt ist. Das zweite Planetenrad 21 ist daher koaxial zur Hohlwelle 24 und zum ersten Planetenrad 25 ausgebildet. Das zweite Planetenrad 21 folgt zum einen der Drehbewegung der rotierbaren Trägereinheit 23 um die zentrale Achse des Getriebes und führt andererseits eine Eigenrotation um die Achse 27 aus, wobei sich die Rotationsgeschwindigkeit des zweiten Planetenrades 21 von der Rotationsgeschwindigkeit des ersten Planetenrades 25 unterscheidet. Beispielsweise kann durch das zweite Planetenrad 21 ein besonders schneller Gang zum Antrieb von Rühr- und Knetwerkzeugen zur Verfügung gestellt werden. Im zweiten Planetenrad 21 ist ein Kupplungsstück 22 angeordnet, in das eine zweite Welle eines Werkstücks des zweiten Typs eingesteckt werden kann. Hierzu weist das Kupplungsstück 22 ein zweites Passungsprofil 45 auf, in das ein entsprechend geformtes Passungsstück an der zweiten Welle des Werkzeugs des zweiten Typs formschlüssig eingeschoben werden kann. Die zweite Welle des Werkzeugs des zweiten Typs wird dazu mit dem zweiten Passungsstück durch die Hohlwelle 24 und das erste Passungsprofil 39 hindurch in das zweite Passungsprofil 45 eingesteckt. Auf diese Weise kann eine drehfeste Kupplung zwischen dem zweiten Planetenrad 21 und der zweiten Welle des Werkzeugs des zweiten Typs hergestellt werden. Die zweite Welle des Werkzeugs des zweiten Typs wird dabei nicht vom ersten Passungsprofil 39 der Hohlwelle 24 erfasst. Stattdessen wird die zweite Welle des Werkzeugs des zweiten Typs durch das schneller drehende zweite Planetenrad 21 angetrieben, so dass durch das zweite Planetenrad 21 eine im Vergleich zur Hohlwelle 24 erhöhte Rotationsgeschwindigkeit zur Verfügung gestellt werden kann.

Die in Figur 4 gezeigte Arretiervorrichtung dient auch zur Fixierung der eingesteckten zweiten Welle des Werkzeugs des zweiten Typs, die durch das zweite Passungsprofil 45 des Kupplungsstücks 22 mit einer von der Drehgeschwindigkeit der Hohlwelle 24 verschiedenen Drehgeschwindigkeit angetrieben wird. Zur Fixierung der zweiten Welle werden die Kugeln 40 durch das C-förmige Federelement 42 radial nach innen in eine auf Höhe der Kugeln 40 vorgesehene umlaufende Rille in der zweiten Welle des Werkzeugs des zweiten Typs gedrückt, so dass die zweite Welle durch die federnd gelagerten Kugeln 40 in axialer Richtung fixiert und am Herausrutschen gehindert wird. Da die zweite Welle des Werkzeugs des zweiten Typs mit höherer Drehgeschwindigkeit rotiert als die Hohlwelle 24, erfüllen die Kugeln 40 hier eine Doppelfunktion: Zum einen fixieren sie die eingesteckte zweite Welle des Werkzeugs des zweiten Typs in axialer Richtung. Zum andern wird durch die Kugeln 40 aber auch eine freie Rotation der zweiten Welle des Werkzeugs des zweiten Typs relativ zur Hohlwelle 24 ermöglicht, so dass die Kugeln 40 je nach Art ihrer Lagerung als Gleit-, Roll- oder Wälzlager für die eingesteckte zweite Welle des Werkzeugs des zweiten Typs dienen.

Bei der in Figur 4 gezeigten Halterungs- und Antriebsvorrichtung kann durch die Auswahl eines geeigneten Passungsstücks festgelegt werden, ob das jeweilige Werkzeug durch die langsamer drehende Hohlwelle 24 oder durch das schneller drehende zweite Planetenrad 21 angetrieben wird. Wenn das Passungsstück an der Welle so ausgebildet ist, dass es mit dem ersten Passungsprofil 39 der Hohlwelle 24 formschlüssig in Eingriff kommt, dann wird das Werkzeug durch die Hohlwelle 24 angetrieben. Wenn das Passungsstück dagegen so ausgebildet ist, dass es sich ohne Eingriff durch das erste Passungsprofil 39 hindurch erstreckt und dann mit dem zweiten Passungsprofil 45 in formschlüssigen Eingriff kommt, dann wird das Werkzeug durch das schneller drehende zweite Planetenrad 21 angetrieben.

Dabei eignet sich die Hohlwelle 24 insbesondere zum Antrieb von Werkzeugen, die ein hohes Drehmoment bei vergleichsweise niedriger Drehgeschwindigkeit benötigen, also beispielsweise zum Antrieb von Knetwerkzeugen zum Kneten von Teigen. Im Gegensatz dazu wird der durch das zweite Planetenrad 21 bereitgestellte Antrieb mit hoher Drehgeschwindigkeit und geringem Drehmoment beispielsweise zum Antrieb eines Schneebesens verwendet, der zum schnellen Aufschlagen von Sahne oder Eiweiß eine vergleichsweise hohe Drehgeschwindigkeit benötigt.

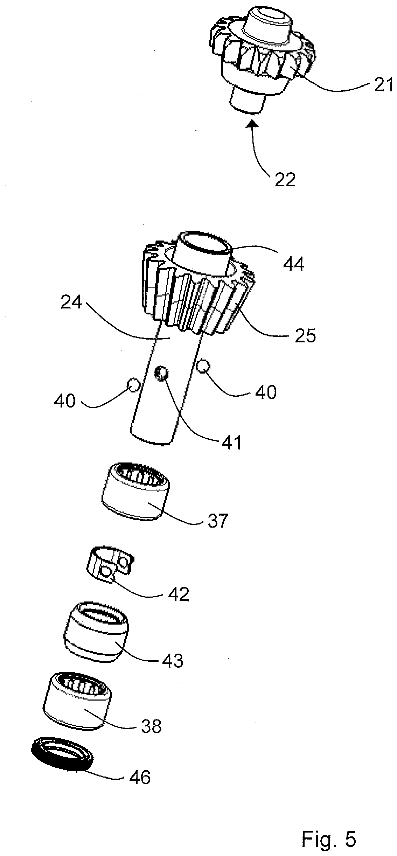

In Figur 5 ist die Halterungs- und Antriebsvorrichtung zusammen mit der Arretiervorrichtung für die eingesteckten Wellen der Werkzeuge nochmals in Form einer Explosionsdarstellung gezeigt. Dabei ist die Hohlwelle 24 zu erkennen, die sich durch das dritte Planetenrad 25 hindurch erstreckt und an ihrer Oberseite das ringförmige Drehlager 44 aufweist. Auf dieses ringförmige Drehlager 44 wird das zweite Planetenrad 21 rotierbar aufgesteckt, das zum Antrieb von Werkzeugen des zweiten Typs vorgesehen ist und hierzu ein entsprechendes Kupplungsstück 22 für diese Werkzeuge aufweist. Zur drehbaren Lagerung der Hohlwelle 24 sind das obere Lager 37 und das untere Lager 38 vorgesehen. Zwischen diesen beiden Lagern befindet sich die Arretiervorrichtung für die eingesteckten Wellen, die mehrere Kugeln 40 umfasst, die an oder in den Ausnehmungen 41 der Hohlwelle 24 federnd gelagert sind. Hierzu ist an der Außenseite der Hohlwelle 24 das C-förmige Federelement 42 vorgesehen, das die Außenseite der Hohlwelle 24 zumindest teilweise umschließt. Die Kugeln 40 werden durch das C-förmige Federelement 42 erfasst und von außen durch die Federkraft des C-förmigen Federelements 42 radial nach innen gedrückt. Eine in die Halterungs- und Antriebsvorrichtung eingesteckte Welle eines Werkzeugs des ersten Typs oder des zweiten Typs wird durch die federnd gelagerten Kugeln 40 in axialer Richtung fixiert. An der Außenseite der Hohlwelle ist ein umlaufender Dichtungsbalg 43 angeordnet, der die Arretiervorrichtung vor Schmutz, Öl und Fett schützt. Darüber hinaus ist am unteren Ende der Halterungs- und Antriebsvorrichtung ein Abschlussstück 46 vorgesehen, um das Eindringen von Nahrungsresten in das Lager der Hohlwelle 24 zu verhindern.

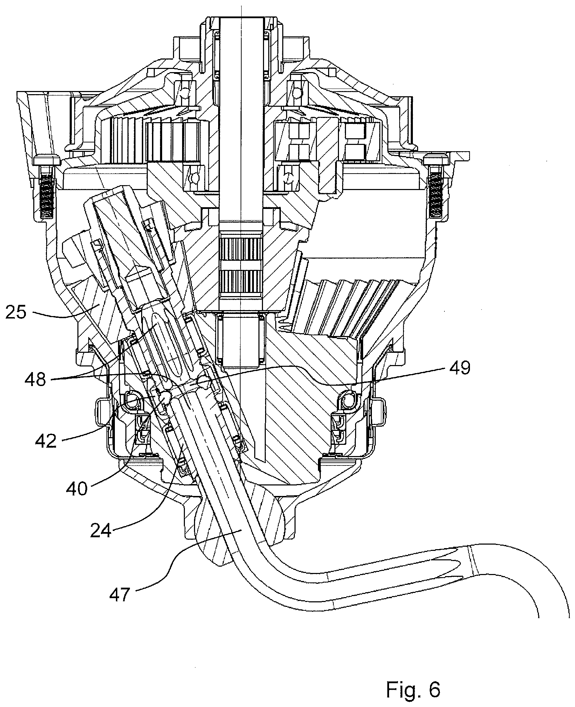

Figur 6 zeigt eine Halterungs- und Antriebsvorrichtung mit einem eingesteckten Werkzeug des ersten Typs. Die erste Welle 47 des Werkzeugs des ersten Typs weist ein erstes Passungsstück 48 mit einem Sechskantprofil auf, das komplementär zum ersten Passungsprofil 39 der Hohlwelle 24 ausgebildet ist, das ebenfalls eine Sechskantform aufweist. Die eingesteckte erste Welle 47 des Werkzeugs des ersten Typs wird daher vom ersten Passungsprofil 39 der Hohlwelle 24 formschlüssig aufgenommen, so dass eine drehfeste Kupplung zwischen der Hohlwelle 24 und der ersten Welle 47 hergestellt wird. Der in Figur 6 als Beispiel für ein Werkzeug des ersten Typs gezeigte Knethaken wird daher durch die Hohlwelle 24 angetrieben, welche bei vergleichsweise niedriger Drehgeschwindigkeit ein hohes Drehmoment zur Verfügung stellt. Die erste Welle 47 des Werkzeugs des ersten Typs weist in Höhe der Arretiervorrichtung eine umlaufende Nut 49 auf. Wenn das Werkzeug des ersten Typs vollständig in die Hohlwelle 24 eingesteckt ist, werden die Kugeln 40 durch das C-förmige Federelement 42 in die umlaufende Nut 49 gedrückt, so dass die erste Welle 47 des Werkzeugs des ersten Typs in axialer Richtung arretiert wird. Zum Herauslösen der ersten Welle 47 aus der Hohlwelle 24 ist eine gewisse Mindestkraft erforderlich, um die Kugeln 40 entgegen der Federkraft des C-förmigen Federelements 42 in die zugehörigen Ausnehmungen 41 in der Hohlwelle 24 zurück zu drücken und das Werkzeug dann herausnehmen zu können.

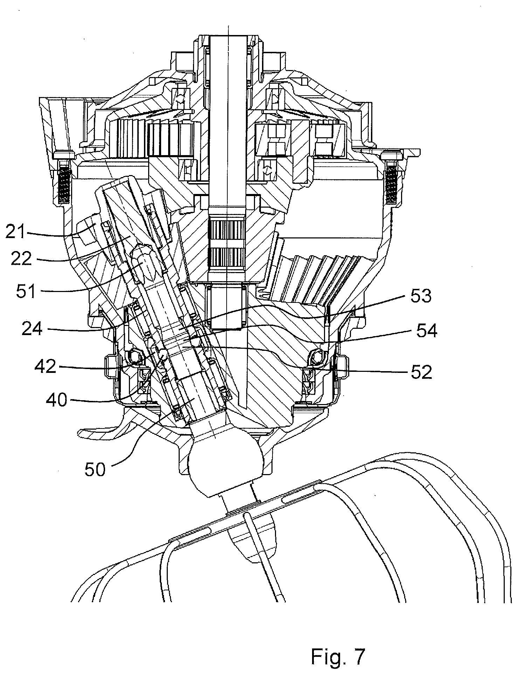

Im Vergleich dazu zeigt Figur 7 eine Halterungs- und Antriebsvorrichtung, in die eine zweite Welle 50 eines Werkzeugs des zweiten Typs eingesteckt ist. Im Unterschied zu der in Figur 6 gezeigten ersten Welle 47 weist die zweite Welle 50 in ihrem unteren Bereich ein rundes Querschnittsprofil auf, an das lediglich im oberen Bereich ein zweites Passungsstück 51 mit einem Sechskantprofil angeformt ist. Insofern kann die zweite Welle 50 durch die Hohlwelle 24 hindurch geschoben werden, ohne dass die zweite Welle 50 in Eingriff mit dem sechskantigen ersten Passungsprofil 39 der Hohlwelle 24 kommt. Stattdessen wird das zweite Passungsstück 51 durch das zweite Passungsprofil 45 des Kupplungsstücks 22 formschlüssig aufgenommen, so dass eine drehfeste Kupplung zwischen der zweiten Welle 50 des Werkzeugs des zweiten Typs und dem Kupplungsstück 22 am zweiten Planetenrad 21 ausgebildet wird. Das Werkzeug des zweiten Typs wird daher durch das zweite Planetenrad 21 angetrieben und rotiert innerhalb der Hohlwelle 24 mit einer höheren Geschwindigkeit als die vergleichsweise langsam rotierende Hohlwelle 24. In Figur 7 ist als Beispiel für ein Werkzeug des zweiten Typs ein Schneebesen gezeigt.

Die eingesteckte zweite Welle 50 des Werkzeugs des zweiten Typs weist auf Höhe der Arretiervorrichtung eine Rille 52 auf. Wenn die zweite Welle 50 vollständig in die Halterungs- und Antriebsvorrichtung eingeschoben ist, werden die Kugeln 40 durch das C-förmige Federelement 42 von verschiedenen Seiten aus in die Rille 52 gedrückt. Die zweite Welle 50 dreht sich innerhalb der Hohlwelle 24 mit einer höheren Geschwindigkeit als die Hohlwelle 24 selbst. Insofern erfüllen die radial nach innen gedrückten Kugeln 40 hier eine doppelte Funktion. Zum einen wird die zweite Welle 50 des Werkzeugs des zweiten Typs durch die in die Rille 52 gedrückten Kugeln 40 in axialer Richtung arretiert und innerhalb der Halterungs- und Antriebsvorrichtung stabil gehaltert. Zum andern bilden die nach innen gedrückten Kugeln 40 ein Drehlager für die relativ zur Hohlwelle 24 mit höherer Geschwindigkeit rotierende zweite Welle 50. Je nach Art der Lagerung der Kugeln 40 kann es sich bei diesem Drehlager um ein Gleitlager, um ein Rolllager oder ein Wälzlager für die zweite Welle 50 handeln. Um die zweite Welle 50 aus der Arretiervorrichtung zu lösen, ist eine Mindestlösekraft erforderlich, um die federnd gelagerten Kugeln 40 zurückzudrücken. Damit das Einschieben der zweiten Welle 50 in die Arretiervorrichtung erleichtert wird, ist der konische Abschnitt 53 am Steg oberhalb der Rille 52 als flacher konischer Abschnitt ausgebildet. Dagegen ist der den Kugeln 40 zugewandte konische Abschnitt 54 relativ steil ausgebildet, damit eine vergleichsweise hohe Mindestlösekraft zum Herausziehen des Werkzeugs erforderlich ist.

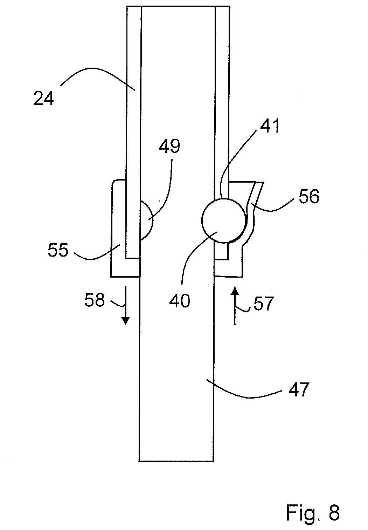

In Figur 8 ist ein weiteres Beispiel einer Arretiervorrichtung gezeigt, die im Unterschied zu der bisher diskutierten Arretiervorrichtung am unteren Ende der Hohlwelle 24 angebracht ist. Die Arretiervorrichtung besteht aus einer umlaufenden Manschette 55, die eine oder mehrere Taschen 56 zur Aufnahme der Kugeln 40 aufweist, wobei sich die Taschen 56 nach oben hin konisch ausweiten. Die Manschette 55 ist mit einem in Figur 8 nicht gezeigten Federelement versehen, das die Manschette 55 in Richtung des Pfeils 57 nach oben gegen die Hohlwelle 24 drückt. Durch diese Federkraft werden die in den konisch ausgebildeten Taschen 56 befindlichen Kugeln 40 durch die Ausnehmung 41 hindurch radial nach innen gedrückt. Wenn eine erste Welle 47 eines Werkzeugs in die Hohlwelle 24 eingeschoben wird, rasten die federnd gelagerten Kugeln 40 in die umlaufende Nut 49 der ersten Welle 47 ein und fixieren die erste Welle 47 in axialer Richtung. Zum Herauslösen des Werkzeugs wird die Manschette 55 manuell entgegen der Federkraft des Federelements in Richtung des Pfeils 58 nach unten gezogen. Dadurch bekommen die in den Taschen 56 befindlichen Kugeln 40 mehr Raum, und die erste Welle 47 kann aus der Halterungs- und Antriebsvorrichtung herausgezogen werden.

### Bezugszeichenliste

- 1: Küchenmaschine
- 2: Rührschüssel
- 3: Arm der Küchenmaschine
- 4: Getriebeeinheit
- 5: koaxiale Ausgangswellen
- 6: Rühr- oder Knetwerkzeug
- 7: erste Getriebestufe
- 8: zweite Getriebestufe
- 9: dritte Getriebestufe
- 10: vierte Getriebestufe
- 11: Riemenscheibe
- 12: antriebsseitige Eingangswelle
- 13: Gehäuse
- 14: drittes Sonnenrad
- 15: drittes Planetenrad
- 16: zweiter innenverzahnter Zahnkranz
- 17: Planetenträger
- 18: abtriebsseitige Ausgangswelle
- 19: zweites Sonnenrad
- 20: erstes Sonnenrad
- 21: zweites Planetenrad
- 22: Kupplungsstück
- 23: rotierbare Trägereinheit
- 24: Hohlwelle
- 25: erstes Planetenrad
- 26: erster innenverzahnter Zahnkranz
- 27: Achse des Kupplungsstücks 22 und der Hohlwelle 24
- 28: zentrale Achse
- 29: abtriebsseitige Ausgangswelle
- 30: Drehlager
- 31: Wälzlager
- 32: Wälzlager
- 33: Mitnahmeprofil
- 34: Axiallager
- 35: Führungstrichter
- 36: Wälzlager
- 37: oberes Lager
- 38: unteres Lager
- 39: erstes Passungsprofil
- 40: Kugel
- 41: Ausnehmung
- 42: Federelement
- 43: Dichtungsbalg
- 44: ringförmiges Drehlager
- 45: zweites Passungsprofil
- 46: Abschlussstück
- 47: erste Welle eines Werkzeugs des ersten Typs
- 48: erstes Passungsstück
- 49: umlaufende Nut
- 50: zweite Welle eines Werkzeugs des zweiten Typs
- 51: zweites Passungsstück
- 52: Rille
- 53: flacher konischer Abschnitt
- 54: steiler konischer Abschnitt
- 55: Manschette
- 56: konisch zulaufende Tasche
- 57: Pfeil
- 58: Pfeil

## Patentansprüche

1. Halterungs- und Antriebsvorrichtung für rotierbare Werkzeuge für eine Küchenmaschine (1), wobei die Halterungs- und Antriebsvorrichtung aufweist:
eine rotierbare Hohlwelle (24) mit einer ersten Passungsaufnahme (39) zur Aufnahme eines ersten Typs von Werkzeugen, und ein weiteres Kupplungsstück (22) mit einer zweiten Passungsaufnahme (45) zur Aufnahme eines zweiten Typs von Werkzeugen, das oberhalb der Hohlwelle (24) rotierbar gelagert ist,
**gekennzeichnet durch**
mindestens einen Anpresskörper (40), der an oder in mindestens einer zugehörigen Ausnehmung (41) der Hohlwelle (24) angeordnet ist, und
mindestens ein Federelement (42), durch dessen Federkraft der mindestens eine Anpresskörper (40) durch die zugehörige Ausnehmung (41) in der Hohlwelle (24) hindurch radial nach innen drückbar ist.

2. Eine Halterungs- und Antriebsvorrichtung nach Anspruch 1, **dadurch gekennzeichnet, dass** die rotierbare Hohlwelle (24) koaxial zu dem weiteren Kupplungsstück (22) angeordnet ist.

3. Eine Halterungs- und Antriebsvorrichtung nach Anspruch 1 oder Anspruch 2, **dadurch gekennzeichnet, dass** es sich bei dem mindestens einen Federelement (42) um ein C-förmiges Federelement handelt, das an der Außenseite der Hohlwelle (24) angeordnet die Hohlwelle (24) zumindest teilweise umschließt.

4. Eine Halterungs- und Antriebsvorrichtung nach einem der Ansprüche 1 bis 3, **dadurch gekennzeichnet, dass** die Hohlwelle (24) für den Antrieb von Werkzeugen des ersten Typs ausgebildet ist, zu deren Betrieb ein vergleichsweise hohes Drehmoment bei vergleichsweise niedriger Drehzahl erforderlich ist.

5. Eine Halterungs- und Antriebsvorrichtung nach einem der Ansprüche 1 bis 4, **dadurch gekennzeichnet, dass** in die Hohlwelle (24) eine Welle eines Werkzeugs des ersten Typs einschiebbar ist, wobei ein an der Welle des Werkzeugs des ersten Typs angebrachtes erstes Passungsstück (48) in der ersten Passungsaufnahme (39) formschlüssig aufnehmbar ist.

6. Eine Halterungs- und Antriebsvorrichtung nach einem der Ansprüche 1 bis 5, **dadurch gekennzeichnet, dass** der mindestens eine radial nach innen gedrückte Anpresskörper (40) als Arretierung in axialer Richtung für eine eingesteckte Welle (47) eines Werkzeugs des ersten Typs wirkt.

7. Eine Halterungs- und Antriebsvorrichtung nach einem der Ansprüche 1 bis 6, **dadurch gekennzeichnet, dass** der mindestens eine Anpresskörper (40) durch die Federkraft des mindestens einen Federelements (42) in eine umlaufende Nut (49) oder in mindestens eine Aussparung in einer eingesteckten Welle (47) eines Werkzeugs des ersten Typs drückbar ist und dazu ausgelegt ist, das Werkzeug des ersten Typs in axialer Richtung zu fixieren.

8. Eine Halterungs- und Antriebsvorrichtung nach einem der Ansprüche 1 bis 7, **dadurch gekennzeichnet, dass** das weitere Kupplungsstück (22) für den Antrieb von Werkzeugen des zweiten Typs ausgebildet ist, zu deren Betrieb ein vergleichsweise niedriges Drehmoment bei vergleichsweise hoher Drehzahl erforderlich ist.

9. Eine Halterungs- und Antriebsvorrichtung nach einem der Ansprüche 1 bis 8, **dadurch gekennzeichnet, dass** in das weitere Kupplungsstück (22) durch die Hohlwelle (24) hindurch eine Welle (50) eines Werkzeugs des zweiten Typs einschiebbar ist, wobei ein an der Welle (50) des Werkzeugs des zweiten Typs angebrachtes zweites Passungsstück (51) in der zweiten Passungsaufnahme (45) formschlüssig aufnehmbar ist.

10. Eine Halterungs- und Antriebsvorrichtung nach einem der Ansprüche 1 bis 9, **dadurch gekennzeichnet, dass** der mindestens eine radial nach innen gedrückte Anpresskörper (40) als Gleit-, Roll- oder Wälzlager für eine eingesteckte Welle (50) eines Werkzeugs des zweiten Typs wirkt.

11. Eine Halterungs- und Antriebsvorrichtung nach einem der Ansprüche 1 bis 10, **dadurch gekennzeichnet, dass** der mindestens eine Anpresskörper (40) durch die Federkraft des mindestens einen Federelements (42) gegen eine eingesteckte Welle (50) eines mit einer von der Hohlwelle (24) abweichenden Drehgeschwindigkeit rotierenden Werkzeugs des zweiten Typs drückbar ist, wobei der mindestens eine radial nach innen gedrückte Anpresskörper (40) als Gleit-, Roll- oder Wälzlager für die eingesteckte Welle (50) des Werkzeugs des zweiten Typs wirkt.

12. Eine Halterungs- und Antriebsvorrichtung nach einem der Ansprüche 1 bis 11, **dadurch gekennzeichnet, dass** der mindestens eine Anpresskörper (40) durch die Federkraft des mindestens einen Federelements (42) gegen eine Rille (52) in einer eingesteckten Welle (50) eines Werkzeugs des zweiten Typs drückbar ist und dazu ausgelegt ist, das Werkzeug des zweiten Typs in axialer Richtung zu fixieren.

13. Eine Halterungs- und Antriebsvorrichtung nach einem der Ansprüche 1 bis 12, **dadurch gekennzeichnet, dass** die Halterungs- und Antriebsvorrichtung eine am unteren Ende der Hohlwelle (24) angeordnete umlaufende Manschette (55) mit mindestens einer zum unteren Ende der Hohlwelle (24) hin konisch zulaufenden Tasche (56) zur Aufnahme des mindestens einen Anpresskörpers (40) umfasst, wobei das mindestens eine Federelement dazu ausgebildet ist, die umlaufende Manschette (55) in axialer Richtung nach oben gegen das untere Ende der Hohlwelle (24) zu drücken.

14. Eine Getriebeeinheit (4) für eine Küchenmaschine (1), welche aufweist
eine Halterungs- und Antriebsvorrichtung nach einem der Ansprüche 1 bis 13,
eine erste Planetengetriebestufe (7), wobei ein erstes Planetenrad (25) der ersten Planetengetriebestufe (7) mit der rotierbaren Hohlwelle (24) verbunden ist und die rotierbare Hohlwelle (24) antreibt,
eine zweite Planetengetriebestufe (8), wobei ein zweites Planetenrad (21) der zweiten Planetengetriebestufe (8) mit dem weiteren Kupplungsstück (22) verbunden ist und das weitere Kupplungsstück (22) antreibt.

15. Eine Küchenmaschine (1), welche eine Getriebeeinheit (4) nach Anspruch 14 aufweist.

## Claims

1. Mounting and drive device for rotatable tools for a food processor (1), wherein the mounting and drive device has:
a rotatable hollow shaft (24) with a first fitting receptacle (39) for receiving a first type of tools, and a further coupling piece (22) with a second fitting receptacle (45) for receiving a second type of tools, which is mounted rotatably above the hollow shaft (24),
**characterised by**
at least one press-on element (40) which is arranged on or in at least one associated cut-out (41) of the hollow shaft (24), and
at least one spring element (42), by means of the elastic force of which the at least one press-on element (40) can be pushed radially inward through the associated cut-out (41) in the hollow shaft (24).

2. Mounting and drive device according to claim 1, **characterised in that** the rotatable hollow shaft (24) is arranged coaxially with respect to the further coupling piece (22).

3. Mounting and drive device according to claim 1 or claim 2, **characterised in that** the at least one spring element (42) is a C-shaped spring element which is arranged on the exterior of the hollow shaft (24) and at least partially encloses the hollow shaft (24).

4. Mounting and drive device according to one of claims 1 to 3, **characterised in that** the hollow shaft (24) is embodied for the drive of tools of the first type, for the operation of which a comparatively high torque with a comparatively low rotational speed is required.

5. Mounting and drive device according to one of claims 1 to 4, **characterised in that** a shaft of a tool of the first type can be inserted into the hollow shaft (24), wherein a first fitting piece (48) attached to the shaft of the tool of the first type can be received in the first fitting receptacle (39) in a form-fitting manner.

6. Mounting and drive device according to one of claims 1 to 5, **characterised in that** the at least one press-on element (40) pushed radially inward acts as a stop in the axial direction for an inserted shaft (47) of a tool of the first type.

7. Mounting and drive device according to one of claims 1 to 6, **characterised in that** the at least one press-on element (40) can be pushed into a peripheral groove (49) or into at least one cut-out in an inserted shaft (47) of a tool of the first type by means of the spring force of the at least one spring element (42) and is designed to fix the tool of the first type in the axial direction.

8. Mounting and drive device according to one of claims 1 to 7, **characterised in that** the further coupling piece (22) is embodied for the drive of tools of the second type, for the operation of which a comparatively low torque with a comparatively high rotational speed is required.

9. Mounting and drive device according to one of claims 1 to 8, **characterised in that** a shaft (50) of a tool of the second type can be inserted into the further coupling piece (22) through the hollow shaft (24), wherein a second fitting piece (51) attached to the shaft (50) of the tool of the second type can be received in the second fitting receptacle (45) in a form-fitting manner.

10. Mounting and drive device according to one of claims 1 to 9, **characterised in that** the at least one press-on element (40) pushed radially inward acts as a sliding, rolling or roller bearing for an inserted shaft (50) of a tool of the second type.

11. Mounting and drive device according to one of claims 1 to 10, **characterised in that** the at least one press-on element (40) can be pushed by means of the spring force of the at least one spring element (42) against an inserted shaft (50) of a tool of the second type which rotates at a rotational speed which differs from the hollow shaft (24), wherein the at least one press-on element (40) which is pushed radially inward acts as a sliding, rolling or roller bearing for the inserted shaft (50) of the tool of the second type.

12. Mounting and drive device according to one of claims 1 to 11, **characterised in that** the at least one press-on element (40) can be pushed by means of the spring force of the at least one spring element (42) against a channel (52) in an inserted shaft (50) of a tool of the second type and is designed to fix the tool of the second type in the axial direction.

13. Mounting and drive device according to one of claims 1 to 12, **characterised in that** the mounting and drive device comprises a circumferential collar (55) arranged at the lower end of the hollow shaft (24) with at least one pocket (56), which runs conically toward the lower end of the hollow shaft (24), in order to receive the at least one press-on element (40), wherein the at least one spring element is embodied to push the circumferential collar (55) in the axial direction upward against the lower end of the hollow shaft (24).

14. Transmission unit (4) for a food processor (1), which has a mounting and drive device according to one of claims 1 to 13, a first planetary gear stage (7), wherein a first planetary wheel (25) of the first planetary gear stage (7) is connected to the rotatable hollow shaft (24) and drives the rotatable hollow shaft (24),
a second planetary gear stage (8), wherein a second planetary wheel (21) of the second planetary gear stage (8) is connected to the further coupling piece (22) and drives the further coupling piece (22).

15. A food processor (1), which has a transmission unit (4) according to claim 14.

## Revendications

1. Dispositif de fixation et d'entraînement pour outils rotatifs pour un robot ménager (1), dans lequel le dispositif de fixation et d'entraînement présente :
un arbre creux (24) rotatif comprenant un premier logement d'ajustement (39) pour le logement d'un premier type d'outils,
et
une pièce de couplage (22) supplémentaire comprenant un deuxième logement d'ajustement (45) pour le logement d'un deuxième type d'outils, laquelle est logée de manière rotative au-dessus de l'arbre creux (24),
**caractérisé par**
au moins un corps de pressage (40) qui est disposé sur ou dans au moins un évidement (41) correspondant de l'arbre creux (24), et
au moins un élément à ressort (42) dont la force de ressort peut presser au moins un corps de pressage (40) radialement vers l'intérieur en traversant l'évidement (41) correspondant situé dans l'arbre creux (24).

2. Dispositif de fixation et d'entraînement selon la revendication 1, **caractérisé en ce que** l'arbre creux (24) rotatif est disposé coaxialement à la pièce de couplage (22) supplémentaire.

3. Dispositif de fixation et d'entraînement selon la revendication 1 ou la revendication 2, **caractérisé en ce que** l'au moins un élément à ressort (42) est un élément à ressort en forme de C qui, disposé sur le côté extérieur de l'arbre creux (24), entoure l'arbre creux (24) au moins en partie.

4. Dispositif de fixation et d'entraînement selon l'une quelconque des revendications 1 à 3, **caractérisé en ce que** l'arbre creux (24) est réalisé pour l'entraînement d'outils du premier type, pour le fonctionnement desquels un couple comparativement élevé avec une vitesse de rotation comparativement basse est nécessaire.

5. Dispositif de fixation et d'entraînement selon l'une quelconque des revendications 1 à 4, **caractérisé en ce qu'**un arbre d'un outil du premier type est insérable dans l'arbre creux (24), une première pièce d'ajustement (48) placée sur l'arbre de l'outil du premier type pouvant être logée par adhérence de forme dans le premier logement d'ajustement (39).

6. Dispositif de fixation et d'entraînement selon l'une quelconque des revendications 1 à 5, **caractérisé en ce que** l'au moins un corps de pressage (40) pressé radialement vers l'intérieur agit en tant que dispositif de blocage en direction axiale pour un arbre inséré (47) d'un outil du premier type.

7. Dispositif de fixation et d'entraînement selon l'une quelconque des revendications 1 à 6, **caractérisé en ce que** l'au moins un corps de pressage (40), en raison de la force de ressort de l'au moins un élément à ressort (42), peut être pressé dans une cannelure (49) périphérique ou dans au moins un évidement dans un arbre (47) inséré d'un outil du premier type et est conçu pour fixer l'outil du premier type en direction axiale.

8. Dispositif de fixation et d'entraînement selon l'une quelconque des revendications 1 à 7, **caractérisé en ce que** la pièce de couplage (22) supplémentaire est réalisée pour l'entraînement d'outils du deuxième type, pour le fonctionnement desquels un couple comparativement bas avec une vitesse de rotation comparativement élevée est nécessaire.

9. Dispositif de fixation et d'entraînement selon l'une quelconque des revendications 1 à 8, **caractérisé en ce qu'**un arbre (50) d'un outil du deuxième type est insérable dans la pièce de couplage (22) supplémentaire en traversant l'arbre creux (24), une deuxième pièce d'ajustement (51) placée sur l'arbre (50) de l'outil du deuxième type pouvant être logée par adhérence de forme dans le deuxième logement d'ajustement (45).

10. Dispositif de fixation et d'entraînement selon l'une quelconque des revendications 1 à 9, **caractérisé en ce que** l'au moins un corps de pressage (40) pressé radialement vers l'intérieur agit en tant que palier coulissant, palier de roulement ou palier à roulement pour un arbre (50) inséré d'un outil du deuxième type.

11. Dispositif de fixation et d'entraînement selon l'une quelconque des revendications 1 à 10, **caractérisé en ce que** l'au moins un corps de pressage (40), en raison de la force de ressort de l'au moins un élément à ressort (42), peut être pressé contre un arbre (50) inséré d'un outil du deuxième type, en rotation avec une vitesse de rotation différente de l'arbre creux (24), l'au moins un corps de pressage (40) pressé radialement vers l'intérieur agissant en tant que palier coulissant, palier de roulement ou palier à roulement pour l'arbre (50) inséré de l'outil du deuxième type.

12. Dispositif de fixation et d'entraînement selon l'une quelconque des revendications 1 à 11, **caractérisé en ce que** l'au moins un corps de pressage (40), en raison de la force de ressort de l'au moins un élément à ressort (42), peut être pressé contre une rainure (52) dans un arbre (50) inséré d'un outil du deuxième type et est conçu pour fixer l'outil du deuxième type en direction axiale.

13. Dispositif de fixation et d'entraînement selon l'une quelconque des revendications 1 à 12, **caractérisé en ce que** le dispositif de fixation et d'entraînement comprend une manchette (55) périphérique disposée sur l'extrémité inférieure de l'arbre creux (24), comprenant au moins une poche (56) se terminant de manière conique en direction de l'extrémité inférieure de l'arbre creux (24), destinée à loger l'au moins un corps de pressage (40), l'au moins un élément à ressort étant réalisé pour presser la manchette (55) périphérique en direction axiale vers le haut contre l'extrémité inférieure de l'arbre creux (24).

14. Unité à engrenages (4) pour un robot ménager (1), laquelle comprend
un dispositif de fixation et d'entraînement selon l'une quelconque des revendications 1 à 13,
un premier étage à engrenage planétaire (7), une première roue planétaire (25) du premier étage à engrenage planétaire (7) étant reliée à l'arbre creux (24) rotatif et entraînant l'arbre creux (24) rotatif,
un deuxième étage à engrenage planétaire (8), une deuxième roue planétaire (21) du deuxième étage à engrenage planétaire (8) étant reliée à la pièce de couplage (22) supplémentaire et entraînant la pièce de couplage (22) supplémentaire.

15. Robot ménager (1) qui comprend une unité à engrenages (4) selon la revendication 14.
